# EUROPÄISCHE PATENTSCHRIFT

(11) **EP 0 627 049 B1**
(45) Veröffentlichungstag und Bekanntmachung des Hinweises auf die Patenterteilung: **26.06.1996**
(21) Anmeldenummer: 93903894.9
(22) Anmeldetag: 30.01.1993
(51) Int. Cl.: F16C 19/56, F16C 19/18

(54) **SCHRÄGKUGELLAGER**
ANGULAR BALL BEARING
ROULEMENT A BILLES A CONTACT OBLIQUE

(30) Priorität: 21.02.1992 DE 9202230 U
(43) Veröffentlichungstag der Anmeldung: 07.12.1994
(73) Patentinhaber: INA Wälzlager Schaeffler KG, 91063 Herzogenaurach (DE)
(72) Erfinder: LUNZ, Erich, D-8531 Lonnerstadt (DE)
(86) Internationale Anmeldenummer: EP9300218
(87) Internationale Veröffentlichungsnummer: WO9317251

(56) Entgegenhaltungen:
- DE-U- 9 202 230
- FR-A- 427 875
- FR-A- 427 930
- FR-A- 466 728
- FR-A- 2 114 537
- FR-A- 2 267 476
- GB-A- 891 666
- US-A- 1 783 791

## Beschreibung

Die Neuerung betrifft ein in beiden Axialrichtungen belastbares Schrägkugellager mit in axialer Richtung zueinander versetzten Kugelkränzen und einem Außen- und einem Innenring, wobei einer der Ringe zweigeteilt ist und die Laufringteile des zweigeteilten Laufrings mit ihren Stirnflächen aneinanderliegen und die Kugelkränze ausgehend von einer Trennebene an den Stirnflächen des geteilten Laufringes in ihrem Durchmesser stufenweise zu- oder abnehmen.

Ein derartiges Kugellager ist aus der FR-A-427 875 vorbekannt. Es besteht aus einem Innenring, einem zweiteiligen Außenring und mehreren, auf zugehörigen Laufbahnen abwälzenden Kugelkränzen, die ausgehend von einer Trennebene des geteilten Außenringes in ihrem Durchmesser stufenweise abnehmen.

Der Nachteil dieses Lagers besteht darin, daß es vollrollig ausgebildet ist, d. h. die Wälzkörper in keinem Käfig geführt sind.

Bekannt sind auch zweireihige Schrägkugellager mit Käfig, die in der Funktion paarweise verwendeten einreihigen Schrägkugellagern in 0-Anordnung entsprechen. Sie können hohe radiale Kräfte und in beiden Richtungen axiale Kräfte aufnehmen und sind besonders für Lagerungen geeignet, bei denen eine spielfreie axiale Führung gefordert wird. Ein solches Lager wird beispielsweise in dem DE-GM 17 68 081 beschrieben. Das Lager besteht aus einem ungeteilten äußeren Laufring, den beiden inneren Laufringteilen und den beiden in Käfigen geführten Kugelreihen.

Der Nachteil derartiger Lager besteht darin, daß sie die große axiale Tragfähigkeit, die beim Auftreten hoher Axialkräfte erforderlich ist, nicht erreichen. Nun ist es zwar möglich, für hoch belastete Antriebe eine Tragzahlsteigerung durch Hintereinanderpaaren von zweireihigen Schrägkugellagern zu erreichen, jedoch muß diese Erhöhung der Tragzahl mit einem wesentlich vergrößerten axialen Bauraum erkauft werden.

Der Neuerung liegt daher die Aufgabe zugrunde, ein gattungsgemäßes Kugellager zu schaffen, dessen Kugelkränze trotz Käfigführung eine günstige Bauraumausnutzung ermöglichen.

Die Aufgabe wird dadurch gelöst, daß Kugeln der Kugelkränze in Kamm- oder Schnappkäfigen angeordnet sind, wobei ein Ringteil des jeweiligen Käfigs, der außerhalb der Umfangserstreckung der Kugeln verläuft, radial zum äußeren Umfang des jeweils benachbarten, im Durchmesser kleineren Kugelkranzes angeordnet ist und diesen teilweise axial übergreift. Durch diese radiale Anordnung des Ringteiles am äußeren Umfang des jeweils benachbarten, im Durchmesser kleineren Kugelkranzes wird eine kurze Bauweise des Lagers erzielt.

Die Neuerung wird anhand von drei Figuren näher erläutert. Es zeigen:
- Figur 1: ein dreireihiges Schrägkugellager im Querschnitt,
- Figur 2: ein vierreihiges Schrägkugellager im Querschnitt,
- Figur 3: ein sechsreihiges Schrägkugellager im Querschnitt.

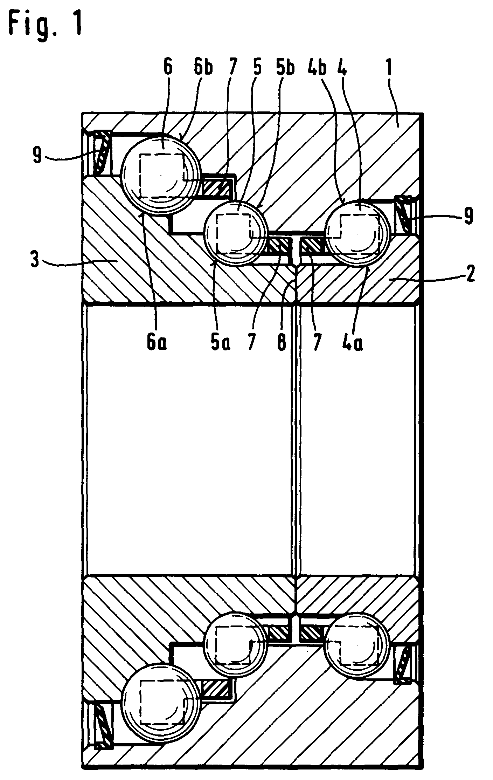

Gemäß Figur 1 besteht das dreireihige Schrägkugellager aus einem einteiligen äußeren Laufring 1, den beiden inneren Laufringen 2, 3, zwei axial hintereinander angeordneten Kugelkränzen 4, 5 und einem weiteren Kugelkranz 6, der gegenüber den Kugeln des ersten und zweiten Kugelkranzes 4, 5 radial versetzt angeordnet ist. An den Schultern der inneren Laufringe 2, 3 und des äußeren Laufringes 1 sind Laufrillen 4a, 5a und 6a sowie 4b, 5b und 6b für die Aufnahme der Kugeln der Kugelkränze 4, 5 und 6 ausgebildet. Die Mantelflächen der Laufrillen 4b, 5b und 6b des äußeren Laufringes 1 erstrecken sich über einen Winkel von 90° zwischen einem durch einen Teilkreis des jeweiligen Kugelkranzes 4, 5, 6 gelegten Radius und einer durch das Zentrum des Kugelkranzes 4, 5, 6 gelegten Querebene. Der Durchmesser der Kugeln des weiteren Kugelkranzes 6 ist größer als der Durchmesser der Kugeln des ersten und zweiten Kugelkranzes 4, 5. Die drei Kugelkränze 4, 5 und 6 werden je durch einen Käfig 7 gehalten, wobei ein Ringteil des zum Kugelkranz 6 gehörigen Käfigs 7, der außerhalb der Umfangserstrekkung der Kugeln 6 verläuft, radial am äußeren Umfang des im Durchmesser kleineren Kugelkranzes 5 angeordnet ist. Der innere Laufring 2 führt im vorliegenden Beispiel den Kugelkranz 4, während der innere Laufring 3 die Kugelkränze 5 und 6 führt, so daß die Trennebene 8 beider Laufringe 2, 3 nicht ihre Symmetrieebene ist. Die Abdichtung des Lagers nach außen erfolgt durch Dichtringe 9.

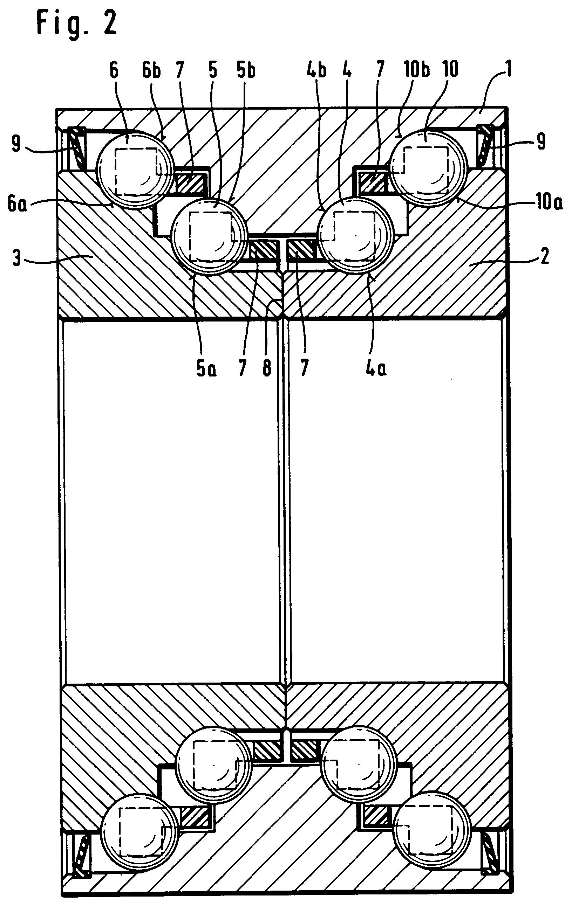

In Figur 2 ist ein vierreihiges Schrägkugellager dargestellt, welches zwischen den beiden inneren Laufringen 2 und 3 und dem äußeren Laufring 1 zusätzlich zum ersten, zweiten und dritten Kugelkranz 4, 5, 6 einen weiteren Kugelkranz 10 aufweist, der radial versetzt zum Kugelkranz 4 angeordnet ist. Die Kugelkränze 4, 10, 5 und 6 werden in den Laufrillen 4a, 10a, 5a und 6a der inneren Laufringe 2 und 3 und in den Laufrillen 4b, 10b, 5b und 6b des äußeren Laufringes 1 über einen Winkel von 90° zwischen einem durch einen Teilkreis des jeweiligen Kugelkranzes 4, 10, 5 und 6 gelegten Radius und einer durch das Zentrum des Kugelkranzes 4, 10, 5 und 6 gelegten Querebene. Die Durchmesser der Kugeln sämtlicher Kugelkränze 4, 5, 6, 10 sind dabei gleich groß gewählt. Da beide innere Laufringe 2, 3 je zwei Laufbahnen für die Kugelkränze 4, 10 bzw. 5, 6 aufweisen, ist die Trennebene 8 gleichzeitig die Symmetrieebene. Auch hier werden die Kugeln aller Kugelkränze 4, 5, 6, 10 jeweils in einem Käfig 7 geführt, wobei jeweils ein Ringteil des zum Kugelkranz 6 und 10 gehörigen Käfigs 7 der außerhalb der Umfangserstreckung der Kugeln 6 und 10 verläuft, radial am äußeren Umfang der im Durchmesser kleineren Kugelkränze 5 und 4 angeordnet ist.

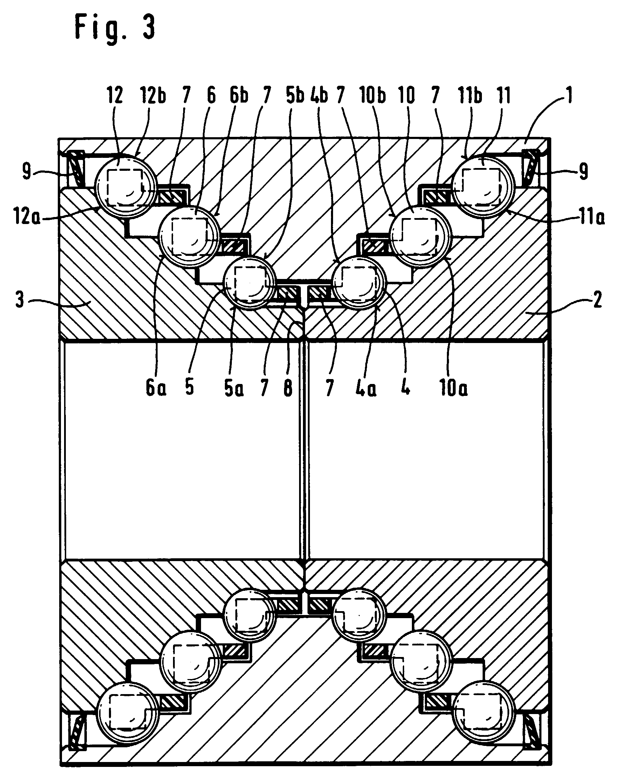

Figur 3 unterscheidet sich von Figur 2 dadurch, daß zwischen den inneren Laufringen 2, 3 und dem äußeren Laufring 1 zusätzlich zu den bereits vorhandenen Kugelkränze 4, 5, 6, 10 zwei weitere Kugelkränze 11, 12 radial versetzt zu den genannten Kugelkränzen angeordnet sind. Ebenso wie in Figur 1 und 2 werden die Kugelkränze 4, 10, 11, 5, 6 und 12 in den entsprechenden Laufrillen 4a, 10a, 11a und 5a, 6a und 12a der inneren Laufringe 2, 3 und in den Laufrillen 4b, 10b, 11b, 5b, 6b und 12b des äußeren Laufringes 1 geführt. Auch erstrecken sich die Mantelflächen der Laufrillen 4b, 10b, 11b und 5b, 6b und 12b des äußeren Laufriges 1 über einen Winkel von 90° zwischen einem durch einen Teilkreis des jeweiligen Kugelkranzes 4, 10, 11, 5, 6 und 12 gelegten Radius und einer durch das Zentrum des Kugelkranzes 4, 10, 11, 5, 6 und 12 gelegten Querebene. Die Durchmesser der Kugeln der Kugelkränze 10, 11, 6 und 12 untereinander sind dabei gleich groß, gegenüber dem Durchmesser der Kugeln der Kugelkränze 4, 5 jedoch größer.

Die Neuerung ist nicht auf die drei Ausführungsbeispiele beschränkt, insbesonders sind Kombinationen einzelner Merkmale der Ausführungsbeispiele möglich. Auch ist es denkbar, daß der äußere Laufring 1 zweiteilig und die inneren Laufringe 2, 3 einteilig ausgebildet sind. Auch die Zweiteilung beider Laufringe ist möglich.

### Bezugszahlen

- 1: äußerer Laufring
- 2, 3: innerer Laufring
- 4,5,6,10,11,12: Kugelkränze
- 4a, 10a, 11a: Laufrillen des inneren Laufringes 2
- 5a, 6a, 12a: Laufrillen des inneren Laufringes 3
- 4b,10b,11b,5b, 6b, 12b: Laufrillen des äußeren Laufringes 1
- 7: Käfig
- 8: Trennebene
- 9: Dichtringe

## Patentansprüche

1. In beiden Axialrichtungen belastbares Schrägkugellager mit in axialer Richtung zueinander versetzten Kugelkränzen (4, 10, 11, 5, 6, 12) und einem Außen- (1) und einem Innenring (2, 3), wobei einer der Ringe zweigeteilt ist und die Laufringteile (2, 3) des zweigeteilten Laufrings mit ihren Stirnflächen aneinanderliegen und die Kugelkränze (4, 10, 11, 5, 6, 12) ausgehend von einer Trennebene (8) an den Stirnflächen des zweigeteilten Laufringes in ihrem Durchmesser stufenweise zu- oder abnehmen, **dadurch gekennzeichnet**, daß Kugeln der Kugelkränze (4, 10, 11, 5, 6, 12) in Kamm- oder Schnappkäfigen (7) angeordnet sind, wobei ein Ringteil des jeweiligen Käfigs (7), der außerhalb der Umfangserstreckung der Kugeln (11, 10, 12, 6) verläuft, radial zum äußeren Umfang des jeweils benachbarten, im Durchmesser kleineren Kugelkranzes (10, 4, 6, 5) angeordnet ist und diesen teilweise axial übergreift.

## Claims

1. An angular ball bearing capable of being loaded in both axial directions comprising ball rings (4, 10, 11, 5, 6, 12) axially offset with respect to one another, an outer race ring (1) and an inner race ring (2, 3), one of these rings being composed of two ring parts (2, 3) with end faces bearing against each other and the diameter of the ball rings (4, 10, 11, 5, 6, 12) increases or decreases in steps starting from a separating plane (8) at the end faces of the ring composed of two ring parts, **characterized in that** balls of the ball rings (4, 10, 11, 5, 6, 12) are arranged in prong-type or snap cages (7), and one ring part of each cage (7) extending outside of the peripheral extent of the balls (11, 10, 12, 6) is arranged radially of the outer periphery of the respective adjacent ball ring (10, 4, 6, 5) of smaller diameter while partially overlapping this ball ring in axial direction.

## Revendications

1. Roulement à billes à contact oblique capable de porter une charge dans les deux directions axiales comprenant des couronnes à billes (4, 10, 11, 5, 6, 12), une bague externe (1) et une bague interne (2, 3), l'une de ces bagues étant composée de deux sections annulaires (2, 3) dont les faces frontales s'appuyent l'une contre l'autre alors que le diamètre des couronnes à billes (4, 10, 11, 5, 6, 12) augmente ou décroît en gradins à partir d'un plan de séparation (8) situé aux faces frontales de la bague en deux sections, **caractérisé en ce que** des billes des couronnes à billes (4, 10, 11, 5, 6, 12) sont agenceés dans des cages en peigne ou à encliquetage (7), et une section annulaire de chaque cage (7) qui s'étend en-dehors de l'étendue périphérique des billes (11, 10, 12, 6) est agencée radialement par rapport à la périphérie extérieure de la couronne à billes respective voisine de plus petit diamètre (10, 4, 6, 5) en recouvrant celle-ci partiellement en direction axiale.
